Europäisches Patentamt

European Patent Office

Office européen des brevets

(11) Numéro de publication: **0 057 655**
**A2**

## (12) DEMANDE DE BREVET EUROPEEN

(21) Numéro de dépôt: **82450001.1**

(22) Date de dépôt: **02.02.82**

(51) Int. Cl.³: **B 44 C 7/02**

(30) Priorité: **02.02.81 FR 8102070**

(43) Date de publication de la demande: **11.08.82**
**Bulletin 82/32**

(84) Etats contractants désignés: **BE CH DE GB IT LI NL SE**

(71) Demandeur: **TEXAA Société Anonyme de droit français,
140 Avenue du Maréchal Leclerc, F-33130 Begles (FR)**

(72) Inventeur: **Demptos, Bernard, 140, avenue du Maréchal
Leclerc, F-33130 Begles (FR)**

(74) Mandataire: **Thebault, Jean-Louis, 3, rue du Professeur
Demons, F-33000 Bordeaux (FR)**

(54) **Dispositif de jointiement pour revêtement mural du type à parement et sous-couche en mousse.**

�ហ L'invention concerne un dispositif de jointoiement pour revêtement mural composite épais et souple du type constitué par un parement de surface (4) solidaire d'une sous-couche (5) en mousse notamment, caractérisé en ce qu'il est constitué d'un profilé tubulaire (6) creux de section quadrangulaire et pourvu longitudinalement dans la partie centrale de l'une de ses faces d'une fente (8) de largeur constante sensiblement égale au double de l'épaisseur dudit parement de surface (4), ledit profilé étant fixé par tous moyens appropriés contre la paroi (3) entre les deux lés (1, 2) à jointoyer, avec sa face fendue (7) tournée vers l'extérieur, ladite fente recevant par engagement à force les lisières débordantes (4a, 4b), réalisées à cet effet, des deux parements adjacents de façon à obtenir un joint entre lés à la façon tapissier.
Application aux revêtements muraux.

# DISPOSITIF DE JOINTOIEMENT POUR
## REVETEMENT MURAL DU TYPE A PAREMENT ET
### SOUS-COUCHE EN MOUSSE

La présente invention concerne un dispositif de jointoiement de lés de revêtement muraux composites du type comprenant par exemple un parement textile de surface collé sur une sous-couche en mousse de matière plastique.

Lors de la pose de tels revêtements sous le jointoiement des lés entre eux s'effectue à l'aide d'une baguette apparente, rapportée sur une seconde baguette fixée sur la paroi entre les deux lés à jointoyer, et dont l'épaisseur correspond sensiblement à celle du revêtement. La baguette apparente déborde légèrement en recouvrant les lisières des deux lés adjacents et est recouverte ou non du même matériau que celui du parement du revêtement composite.

De telles baguettes sont bien entendu visibles, d'autant plus qu'elles font saillie et ne sont pas esthétiques.

Le but de l'invention est de proposer un dispositif de jointoiement de tels revêtements composites épais et souples permettant de supprimer les baguettes apparentes en présentant une jonction bord à bord des parements de surface des revêtements, discrète et solide.

A cet effet, l'invention a pour objet un dispositif de jointoiement pour revêtement mural composite épais et souple du type constitué par un parement de surface solidaire d'une sous-couche en mousse notamment, caractérisé en ce qu'il est constitué d'un profilé tubulaire creux de section quadrangulaire et pourvu longitudinalement, dans la partie centrale de l'une de ses faces, d'une fente de largeur constante sensiblement égale au double de l'épaisseur dudit parement de surface, ledit profilé étant fixé par tous moyens appropriés contre la paroi entre les deux lés à jointoyer, avec sa face fendue tournée vers l'extérieur, ladite fente recevant par engagement à force les lisières débordantes, réalisées à cet effet, des deux parements adjacents de façon à obtenir un joint entre lés à la façon tapissier.

Grâce à un tel dispositif, la face fendue du profilé, ainsi recouverte par les deux lisières rabattues intérieurement l'une contre l'autre, n'introduit aucune discontinuité d'aspect sur la face visible du parement de surface du revêtement.

On réalise ainsi une pose sans joint apparent tout en assurant la protection mécanique de la jonction entre lés notamment à l'écrasement, protection impérative pour le bon comportement dans le temps d'un revêtement très épais et souple.

D'autres caractéristiques et avantages ressortiront de la description qui va suivre de modes de réalisation du dispositif de l'invention, description donnée à titre d'exemple uniquement et en regard du dessin annexé sur lequel :

- Fig. 1 représente une vue en coupe transversale d'un joint selon l'invention, et
- Fig. 2 illustre l'application du dispositif de l'invention à la jonction de lés au droit d'angles saillants.

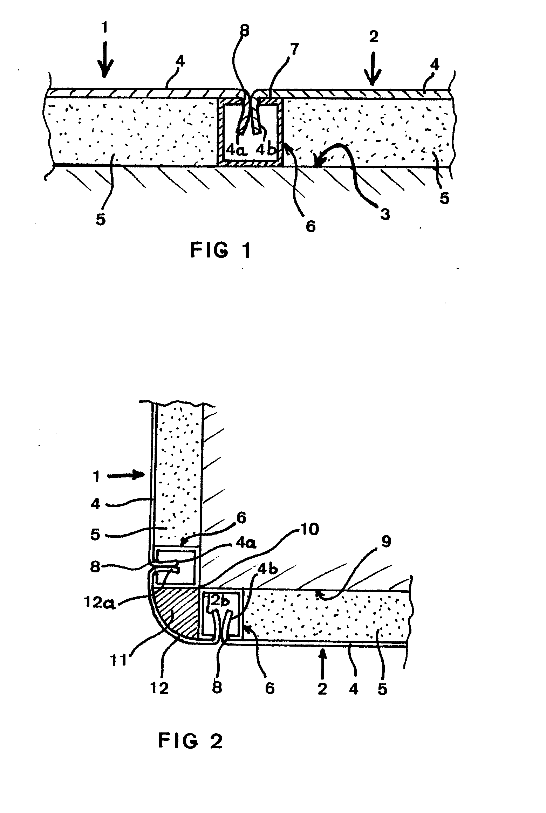

La Fig. 1 est une coupe horizontale au droit d'une jonction conforme à l'invention entre deux lés 1 et 2 d'un revêtement composite collé sur une paroi verticale 3.

Ce revêtement est constitué d'un parement 4 en matière plastique ou textile, lui-même collé sur une sous-couche 5 en mousse synthétique ou fibre minérales,synthétiques ou naturelles.

L'épaisseur du parement 4 est de l'ordre du millimètre cependant que celle de la sous-couche 5 peut varier dans de larges limites, de quelques millimètres à plusieurs centimètres.

Conformément à l'invention, entre deux lés verticaux tels que 1 et 2 est fixé contre la paroi 3, par tous moyens appropriés tels que le collage par exemple, un profilé tubulaire creux 6 coupé à la longueur des lés.

La hauteur du profilé 6 correspond à l'épaisseur de la sous-couche de mousse 5 et sa section est rectangulaire, carrée ou même trapézoïdale.

Sur la face 7 du profilé 6 tournée vers l'extérieur est ménagée une fente 8 courant sur toute la longueur du profilé, dans la partie centrale de ladite face 7.

La largeur de la fente 8 est constante et correspond sensiblement au double de l'épaisseur du parement de surface 4. Lorsque le joint est en place, les lisières débordantes 4a et 4b des deux lés adjacents 1 et 2 sont engagées à l'intérieur du profilé par la fente 8 comme représenté sur la Fig. 1. Les lés 1 et 2 sont, bien entendu, préparés à l'avance, la sous-couche en mousse 5 étant recoupée de façon que le parement 4 déborde très régulièrement de l'ordre de 15 mm par exemple, de la sous-couche.

La mise en place d'un tel dispositif est très facile. Les profilés 6 sont d'abord posés par collage au néoprène par exemple, à l'écartement de 1,50 m (soit, d'axe en axe, 1,51 m avec un profilé de 1 cm de largeur). Le premier lé du revêtement composite est ensuite affiché entre les profilés et posé par collage et talochage. Les parements débordants (4a) sont insérés dans la fente 8 des profilés à l'aide d'un couteau à lame arrondie de préférence avant la pose du lé suivant et l'insertion de ses parements débordants (4b) dans la fente des profilés. La surface visible du parement 4 est parfaitement unie et plane, sans saillie au droit des jonctions entre lés, les parties débordantes 4a, 4b étant plaquées contre la face avant du profilé 6 et maintenues repliées et appliquées l'une contre l'autre par les bords de la fente 8 qui, au plus, pince les parements mais sans les tendre.

L'insertion et le maintien des parties débordantes dans la fente 8 sont facilités par l'élasticité du matériau constitutif du profilé, en particulier une matière plastique extrudée, à la fois suffisamment souple pour épouser les irrégularités de la paroi (mur ou plafond) à revêtir et permettre l'insertion des lisières débordantes, et suffisamment rigide pour assurer le serrage du parement et la bonne protection mécanique du joint. On peut jouer également sur l'épaisseur de la paroi du profilé pour obtenir cette élasticité. Le profilé 6 est par exemple réalisé en polyméthacrylate de méthyle ou en PVC.

Sa largeur est aussi étroite que possible afin de limiter la différence éventuelle d'aspect entre la partie de

- 4 -

parement 4 recouvrant la sous-couche 5 et la partie de parement recouvrant la face avant 7 du profilé. En outre, lorsque le parement 4 n'est pas complètement opaque et laisse voir la couleur de la sous-couche 5, les profilés 6 sont avantageusement colorés de la même couleur que la sous-couche, afin que l'on ne puisse pas remarquer la présence desdits profilés au travers du parement.

Afin de faciliter l'insertion et/ou le pincement des lisières débordantes 4a, 4b dans la même fente 8, les bords de celle-ci peuvent être conformés en conséquence, par exemple inclinés en direction du centre de la fente ou pourvus d'aspérités ou saillies d'agrippage du parement.

La Fig. 2 illustre l'application du dispositif de l'invention au jointoiement de deux lés 1 et 2 appliqués sur une paroi 9 faisant un angle saillant de 90°.

A cet effet, deux profilés 6 identiques, conformes à l'invention, sont collés le long de l'arête 10 sur les deux faces à 90°. Les lés 1 et 2 sont placés contre les profilés 6 et leurs lisières débordantes 4a, 4b sont engagées chacune dans la fente 8 du profilé adjacent. La jonction est complétée par un élément rapporté 11, en bois, matière plastique ou autre, de section en quart de cercle, et collé sur les flancs du profilés 6. Cet élément 11 est recouvert d'un revêtement 12 identique ou analogue au parement 4 et qui déborde également en lisières 12a, 12b insérées dans lesprofilés de la même manière qu'en Fig. 1. On a ainsi une surface visible parfaitement régulière, sans joint apparent.

Enfin, l'invention n'est pas limitée aux modes de réalisation représentés et décrits ci-dessus mais en couvre au contraire toutes les variantes, notamment celles concernant la forme de la section du profilé et celle des éventuels joints complémentaires tels que 11.

- 1 -

REVENDICATIONS

1. Dispositif de jointoiement pour revêtement mural composite épais et souple du type constitué par un parement de surface (4) solidaire d'une sous-couche (5) en mousse notamment caractérisé en ce qu'il est constitué d'un profilé tubulaire (6) creux de section quadrangulaire et pourvu longitudinalement dans la partie centrale de l'une de ses faces d'une fente (8) de largeur constante sensiblement égale au double de l'épaisseur dudit parement de surface (4), ledit profilé étant fixé par tous moyens appropriés contre la paroi (3) entre les deux lés (1,2) à jointoyer, avec sa face fendue (7) tournée vers l'extérieur, ladite fente recevant par engagement à force les lisières débordantes (4a, 4b), réalisées à cet effet, des deux parements adjacents de façon à obtenir un joint entre lés à la façon tapissier.

2. Dispositif de jointoiement suivant la revendication 1 caractérisé en ce que la section du profilé tubulaire creux (6) est rectangulaire, carrée ou trapézoïdale.

3. Dispositif de jointoiement suivant la revendication 1 ou 2, caractérisé en ce que sa hauteur est égale à l'épaisseur de la sous-couche de mousse (5) du revêtement.

4. Dispositif de jointoiement suivant l'une des revendications 1 à 3 caractérisé en ce que le profilé est réalisé en une matière plastique telleque le polyméthacrylate de méthyle ou le PVC et est réalisé par moulage ou extrusion.

5. Dispositif de jointoiement appliqué au revêtement d'angles droits saillants, caractérisé en ce qu'il comporte deux profilés selon l'une des revendications 1 à 4, fixés le long de l'arête saillante (10) sur chacune des faces de la paroi (9) et dans les fentes (8) desquels sont engagées les lisières débordantes, d'une part, des deux lés adjacents (1, 2) et, d'autre part, d'un parement complémentaire (12) rapporté sur un élément de joint (11) de section appropriée, collé sur les flancs desdits profilés (6).

1/1 · 0057655

FIG 1

FIG 2